# EUROPEAN PATENT APPLICATION

(11) **EP 4 749 489 A1**
(43) Date of publication of application: **27.05.2026**
(21) Application number: 25214357.3
(22) Date of filing: 07.11.2025
(51) Int. Cl.: G06F 21/34, H04L 9/32, H04L 9/40

(54) **INFORMATION PROCESSING APPARATUS, METHOD OF INFORMATION PROCESSING APPARATUS, AND RECORDING MEDIUM**

(30) Priority: 22.11.2024 JP 2024204007
(71) Applicant: Canon Kabushiki Kaisha, Tokyo, 146-8501 (JP)
(72) Inventor: SHIBAO, Mayumi, Tokyo, 146-8501 (JP)
(74) Representative: Canon Europe Limited

(57) **Abstract**

An information processing apparatus including a storage, a first user interface, a second user interface, one or more memories storing instructions, and one or more processors which, when executing the instructions, causes the information processing apparatus to register key data to be used for signature verification that is included in a key pair received from an external terminal and generated based on authentication processing in the external terminal, into the storage in association with the first user interface, receive user selection indicating whether to register the key data in association with the second user interface, and, in a case where user selection indicating that the key data is to be registered in association with the second user interface is received, register the key data into the storage in association with the second user interface.

## Description

### Technical Field

The present disclosure relates to an information processing apparatus, a method of the information processing apparatus, and a recording medium.

### BACKGROUND

In recent years, a technique such as the FIDO2.0 defined by the Fast Identity Online (FIDO^{®}) alliance has been known as a method of authenticating a user. The FIDO^{®} is a technique of performing biometric authentication on a terminal that the user has at hand, and verifying data signed using a secret key on the terminal, on an authentication server side.

Japanese Patent Laid-Open Publication No. 2022-76942 describes a technique in which a list of authentication devices for executing authentication is displayed when a user of a terminal apparatus logs into a service provided by a service providing system, and the user selects an authentication device from the list to perform password-less authentication.

An information processing apparatus, e.g., an image forming apparatus, includes a plurality of user interfaces, such as a local user interrace (UI) on which an operation of an operation panel can be performed, a remote UI on which a setting change or an operation of the image forming apparatus can be performed via a web browser from an external apparatus such as a personal computer (PC), and a mobile instruction that executes a function such as printing and transmission by receiving an operation instruction from a mobile terminal. The information processing apparatus is also provided with a user authentication function for using each user interface. In a case where authentication is permitted, the user can log into the image forming apparatus and use functions of the image forming apparatus. In a case where password-less login that uses the FIDO^{®} is provided on each interface of the image forming apparatus, the image forming apparatus having a plurality of user interfaces needs to perform passkey registration for each user interface, which has been bothersome.

### SUMMARY

The present disclosure in its first aspect provides an information processing apparatus as specified in claim 1. Optional features are specified in claims 2 to 5.

The present disclosure in its second aspect provides a method of an information processing apparatus as specified in claim 6. Optional features are specified in claims 7 to 10.

The present disclosure in its third aspect provides a recording medium as specified in claim 11.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram of an example system configuration according to the present embodiment.
Figs. 2A to 2C are diagrams each is an example of a hardware configuration of each device included in a system according to the present embodiment.
Fig. 3 is a diagram of an example software configuration according to the present embodiment.
Fig. 4 is a diagram of example information to be stored in a user database.
Fig. 5 is a diagram of an example screen related to a login function of a local user interface (UI) to be displayed on an operation panel.
Fig. 6 is a diagram of an example screen related to a setting of a local UI to be displayed on an operation panel.
Fig. 7 is a diagram of an example screen related to a login function of a remote UI to be displayed on a browser of an information processing apparatus.
Fig. 8 is a diagram of an example screen related to a setting of a remote UI to be displayed on a browser of an information processing apparatus.
Figs. 9A and 9B are diagrams of examples of a sequence of passkey registration of a remote UI.
Fig. 10 is a diagram of an example sequence of passkey authentication of a local UI.
Figs. 11A and 11B are flowcharts illustrating passkey registration processing of a remote UI.
Fig. 12 is a diagram of an example screen related to guide display.
Figs. 13A to 13D are diagrams of example mobile terminal screens.

### DESCRIPTION OF THE EMBODIMENTS

Hereinafter, embodiments of the present disclosure will be described with reference to the drawings.

### [First Embodiment]

The embodiments of the present disclosure will now be described as examples of an image forming apparatus such as a multifunction peripheral (MFP) having functions such as copy, printing, and scan, serving as an information processing apparatus to which the present disclosure is applied. In the present embodiment, a digital signature verification technique as used in the Fast Identity Online (FIDO^{®}) is employed as an authentication structure for the user using functions and services provided by an image forming apparatus. Specifically, the technique to be described in the embodiment is related to a structure of performing biometric authentication on a mobile terminal (information processing apparatus) that the user has at hand, and authenticating the user by verifying consequently-output digital signature data on an image forming apparatus side.

By using this structure, it becomes possible to authenticate the user who uses a device, without a password.

As one of features of the present embodiment, a digital function corresponding to an FIDO^{®} service in the FIDO^{®} technique, which will be described below, is installed and implemented in an image processing apparatus. The FIDO^{®} service or technique or standard including associated structure is used as an example, but the present disclosure is not limited to the FIDO^{®} standard. Authentication to be performed on a mobile terminal is not limited to biometric authentication, and another authentication method such as authentication that uses, for example, a passcode or the like can also be used.

### <System Configuration>

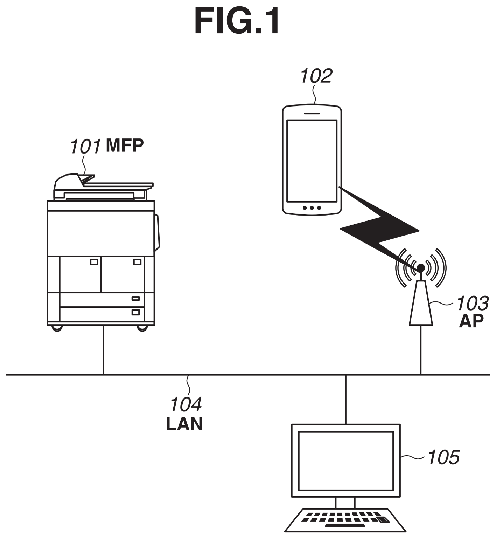

Hereinafter, a system configuration according to the present embodiment will be described with reference to Fig. 1.

Fig. 1 is a diagram of an example system configuration according to an embodiment of the present disclosure.

An MFP 101 is an image forming apparatus serving as an information processing apparatus to which the present disclosure is applied.

A mobile terminal 102 is a mobile terminal such as, for example, a smartphone. The mobile terminal is, for example, a terminal equipped with iOS of Apple Inc., a terminal equipped with Android^{®} of Google LLC, or the like. The mobile terminal 102 can communicate with the MFP 101 via an access point (AP) 103 of a wireless local area network (LAN) or a wired LAN 104.

An information processing apparatus 105 is, for example, a Personal Computer (PC) or the like. The information processing apparatus 105 can also communicate with the MFP 101 via the AP 103 or the wired LAN 104.

In a case where the MFP 101 has a wireless LAN access point function, a configuration can also be employed in which the mobile terminal 102 directly performs communication by connecting to the wireless LAN access point function of the MFP 101.

### <Hardware Configuration of MFP 101>

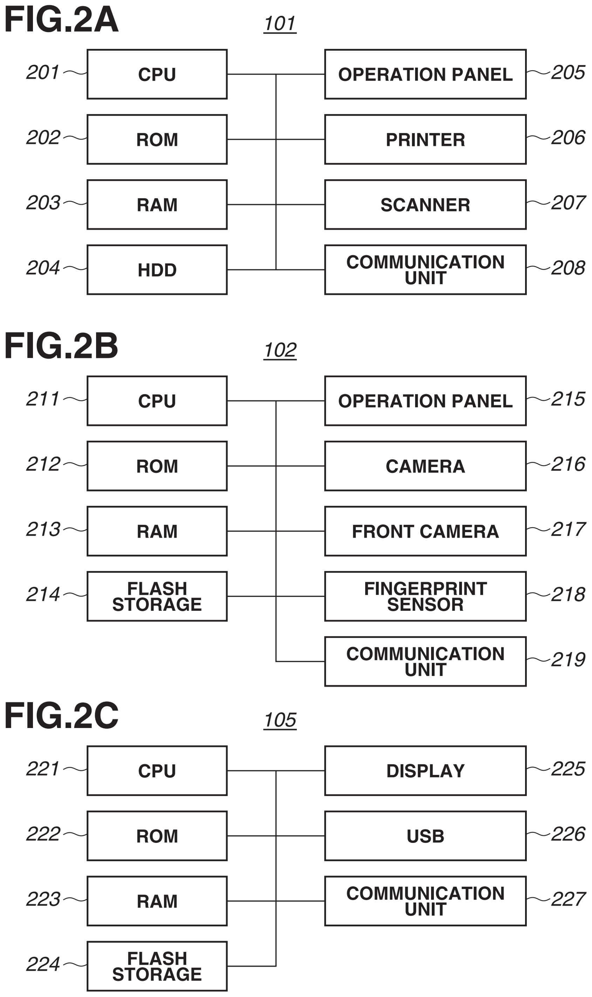

Fig. 2A is a schematic diagram of an example of a hardware configuration of the MFP 101.

A central processing unit (CPU) 201 is a central processing unit (processor) that controls the entire operations of the MFP 101.

A random access memory (RAM) 203 is a volatile memory, serves as a work area, and is used as a temporary storage region for loading various control programs stored in a read-only memory (ROM) 202 and a hard disk drive (HDD) 204.

The ROM 202 is a nonvolatile memory, and stores a boot program of the MFP 101, and the like.

The HDD 204 is a nonvolatile hard disk or a flash storage with larger capacity as compared with the RAM 203. The HDD 204 stores a control program of the MFP 101. An operating system (OS) and an application program are also stored in the HDD 204.

When the MFP 101 is activated, the CPU 201 executes the boot program stored in the ROM 202. This boot program is a program for reading out a program of the OS stored in the HDD 204, and loading the program onto the RAM 203. When the CPU 201 executes the boot program, the CPU 201 sequentially executes the program of the OS loaded on the RAM 203, and performs the control of the MFP 101. The CPU 201 also stores data to be used for operations that are based on a control program, on the RAM 203, and performs reading and writing.

The MFP 101 employs a configuration in which one CPU 201 executes each piece of processing illustrated in a flowchart described below, but another configuration can also be employed. For example, a configuration can also be employed in which a plurality of CPUs or microprocessor units (MPUs) execute, in cooperation, each piece of processing illustrated in a flowchart to be described below. A part of processing to be described below can also be executed using hardware circuitry, such as an application specific integrated circuit (ASIC) or a field-programmable gate array (FPGA).

An operation panel (operation unit) 205 is a touch-operable display (touch panel).

A printer 206 is a printer engine that prints print data received from the outside via a communication unit 208, or digital data acquired from a scanner 207.

The scanner 207 is a scanner device that reads a paper document and convers the paper document into digital data.

The communication unit 208 is a network interface for connecting to the internet or a local area network (LAN) of an office.

### <Hardware Configuration of Mobile Terminal 102>

Fig. 2B is a schematic diagram of an example of a hardware configuration of the mobile terminal 102.

A CPU 211 is a central processing unit (processor) that controls entire operations of the mobile terminal 102.

A RAM 213 is a volatile memory, serves as a work area, and is used as a temporary storage region for loading various control programs stored in a ROM 212 and a flash storage 214.

The ROM 212 is a nonvolatile memory, and stores a boot program of the mobile terminal 102, and the like.

The flash storage 214 is a nonvolatile memory storage with larger capacity as compared with the RAM 213. The flash storage 214 stores a control program of the mobile terminal 102. An OS and an application program are also stored in the flash storage 214.

An operation panel 215 is a touch-operable display (touch panel).

A camera 216 is a camera module that can be used for image capture of photos or moving images, or image capture of a quick response (QR) code^{®}. A front camera 217 is a camera that can be used for image capture of a user of the mobile terminal 102, and face authentication. A fingerprint sensor 218 is a sensor that can be used for fingerprint authentication. A communication unit 219 is a network interface for performing wireless communication.

### <Hardware Configuration of Information Processing Apparatus 105>

Fig. 2C is a schematic diagram of an example of a hardware configuration of the information processing apparatus 105.

A CPU 221 is a central processing unit (processor) that controls entire operations of the information processing apparatus 105.

A RAM 223 is a volatile memory, serves as a work area, and is used as a temporary storage region for loading various control programs stored in a ROM 222 and a flash storage 224.

The ROM 222 is a nonvolatile memory, and stores a boot program of the information processing apparatus 105, and the like.

The flash storage 224 is a nonvolatile memory storage with larger capacity as compared with the RAM 223. The flash storage 224 stores a control program of the mobile terminal 102. An OS and an application program are also stored in the flash storage 224.

A display 225 is a display that displays a user interrace (UI) to be displayed by an application program. The display 225 can be an external device. The display 225 can also be a display with a touch panel.

A universal serial bus (USB) 226 is an interface for establishing USB connection. For example, a keyboard or the like is connected to the USB 226. A configuration can also be employed in which the keyboard is preliminarily provided on a main body of the information processing apparatus 105.

A communication unit 227 is a network interface for performing wired LAN communication.

### <Software Configuration>

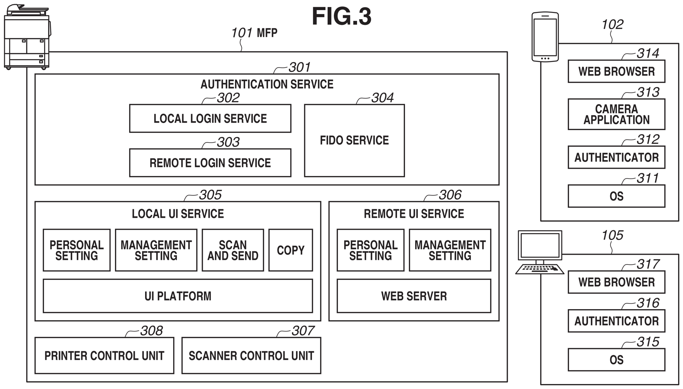

Fig. 3 is a schematic diagram of example software configurations of the MFP 101, the mobile terminal 102, and the information processing apparatus 105. The software configuration of the MFP 101 is implemented by the CPU 201 of the MFP 101 reading out and executing a program stored in the HDD 204 or the like. The software configuration of the mobile terminal 102 is implemented by the CPU 211 of the mobile terminal 102 reading out and executing a program stored in the flash storage 214 or the like. The software configuration of the information processing apparatus 105 is also implemented by the CPU 221 of the information processing apparatus 105 reading out and executing a program stored in the flash storage 224 or the like.

### (MFP 101)

The MFP 101 includes an authentication service 301 for authenticating the user who uses the MFP 101. The authentication service 301 includes a local login service 302, a remote login service 303, and an FIDO^{®} service 304.

The local login service 302 displays a login screen of the operation panel 205, authenticates a user who uses the operation panel 205, and causes the user to log into the operation panel 205.

The remote login service 303 authenticates a user who accesses a web service (remote UI) via the communication unit 208, and causes the user to log into the remote Ul.

The FIDO^{®} service 304 has a web server function capable of communicating in accordance with a hypertext transfer protocol (HTTP). The FIDO^{®} service 304 is also equipped with an authentication function of the FIDO^{®} alliance or Web Authentication (WebAuthn) defined by the World Wide Web Consortium (W3C).

A local UI service 305 of the MFP 101 provides a user interface for providing a function, to the user who has logged into the operation panel 205. The local UI service 305 includes a menu for the user to select a function, an application, a UI platform that governs the control of screen transition, and the like. The local UI service 305 is equipped with, for example, a "copy" application that provides a UI of a copy function to the user, a "print" application that provides a UI of a print function, a "scan-and-send" application that provides a UI for transmitting a scanned document to the outside, and the like.

A remote UI service 306 of the MFP 101 provides a user interface to be displayed on a web browser 317 of the information processing apparatus 105, to the user who has logged into the web service. The remote UI service 306 includes a personal setting/management setting for the user changing the setting of functions, an application, a web server, and the like.

A printer control unit 308 is a software module for controlling the printer 206.

A scanner control unit 307 is a software module for controlling the scanner 207.

Each of these software modules provides an application programing interface (API) for operating the printer 206 or the scanner 207, to an application. The software configuration of the MFP 101 includes an operating system and driver software for controlling various types of hardware, which are not illustrated.

### (Mobile Terminal 102)

An OS 311 of the mobile terminal 102 is an operating system. The OS 311 is configured by, for example, a terminal on which iOS of Apple Inc. is installed, a terminal on which Android^{®} of Google LLC is installed, or the like, for example.

An authenticator 312 is software having an FIDO^{®} authenticator function defined by the FIDO^{®} alliance. The function of the authenticator 312 can also be incorporated into an operating system as one function of the operating system (OS 311).

A camera application 313 is an application for capturing photos and moving images by controlling the camera 216 and the front camera 217. The camera application 313 also has a function of reading and decoding a QR code^{®}.

A web browser 314 is software operating as a client function of performing HTTP communication. The web browser 314 includes Safari of Apple Inc., Chrome of Google LLC, Edge of Microsoft Corporation, or the like.

### (Information Processing Apparatus 105)

An OS 315 of the information processing apparatus 105 is an operating system.

An authenticator 316 is software having an FIDO^{®} authenticator function defined by the FIDO^{®} alliance. The function of the authenticator 316 can also be incorporated into an operating system as one function of the operating system (OS 315).

The web browser 317 is software operating as a client function of performing HTTP communication. The web browser 317 includes Safari of Apple Inc., Chrome of Google LLC, Edge of Microsoft Corporation, or the like.

### <User Account>

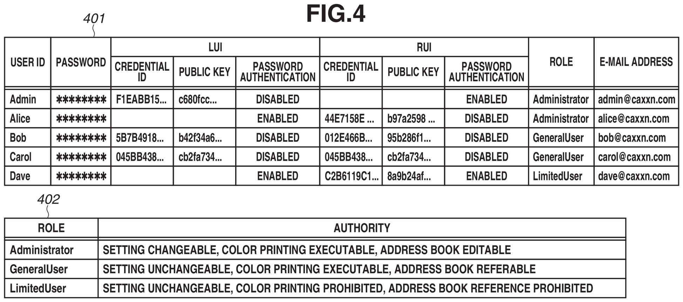

Fig. 4 is a diagram of an example of a user database to be stored in the HDD 204 of the MFP 101.

The MFP 101 stores user account information into a user database 401 and manages the user account information. The MFP 101 can use, as the user database 401, a database of another node on a network after performing the encryption and tamper-proofing of a communication path and a storage.

In the user database 401, information is recorded such as a user ID, a password, passkey information (credential ID, public key) to be used for authentication of the FIDO^{®}, a role, an e-mail address, and enabling/disabling of password authentication.

In the user database 401, the "user ID" is an identifier for identifying the user.

The "password" is a password to be used for authentication.

The "role" is information indicating a usage authority given to the MFP 101 of the user. A role information table 402 indicates an example of each role and usage authority. The information in the role information table 402 is set at the time of factory shipment of the MFP 101. In addition to the definition of a role included in the MFP 101 from the time of factory shipment, the user may be enabled to set detailed usage authority, create a new role, and register the role into the role information table 402. It is also possible to change the definition of an existing role.

The "e-mail address" is information indicating an e-mail address of the user.

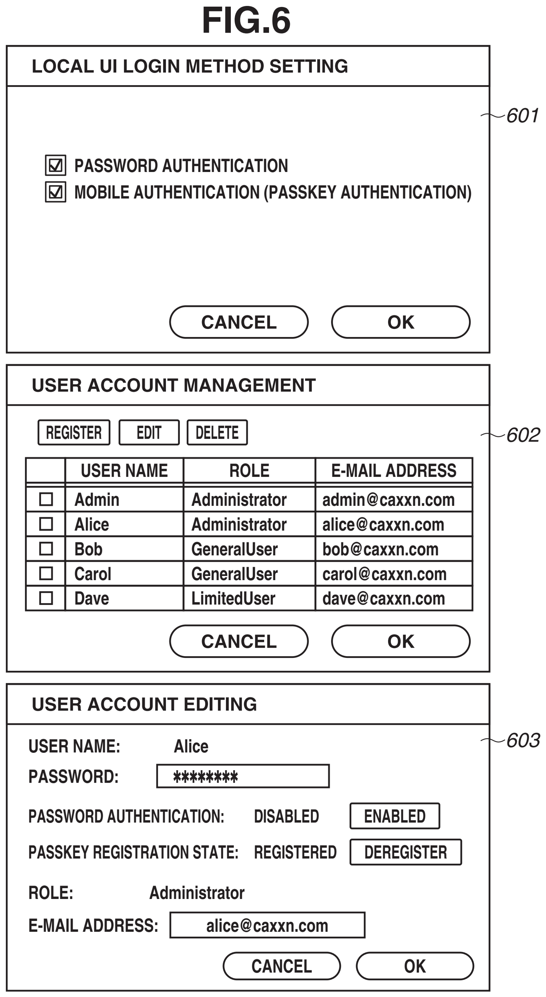

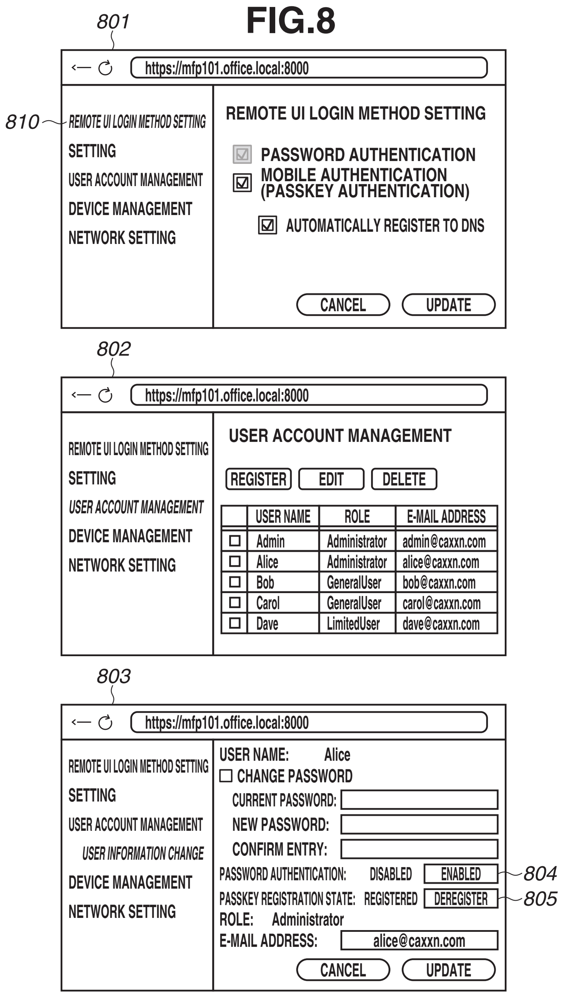

The registration, editing, and deletion of the user account information are performed via Uls of a user account management screen 602 and a user account editing screen 603 in Fig. 6, and a user account management screen 802 and a user information change editing screen 803 in Fig. 8, which will be described below.

The user database 401 is referred to by the authentication service 301 to authenticate the user. The passkey information (credential ID, public key) is stored via the FIDO^{®} service 304. In the user database 401, passkey information (credential ID, public key) for a local UI (LUI), and passkey information (credential ID, public key) for a remote UI (RUI) can be individually stored and managed as passkey information.

### <User Authentication Function>

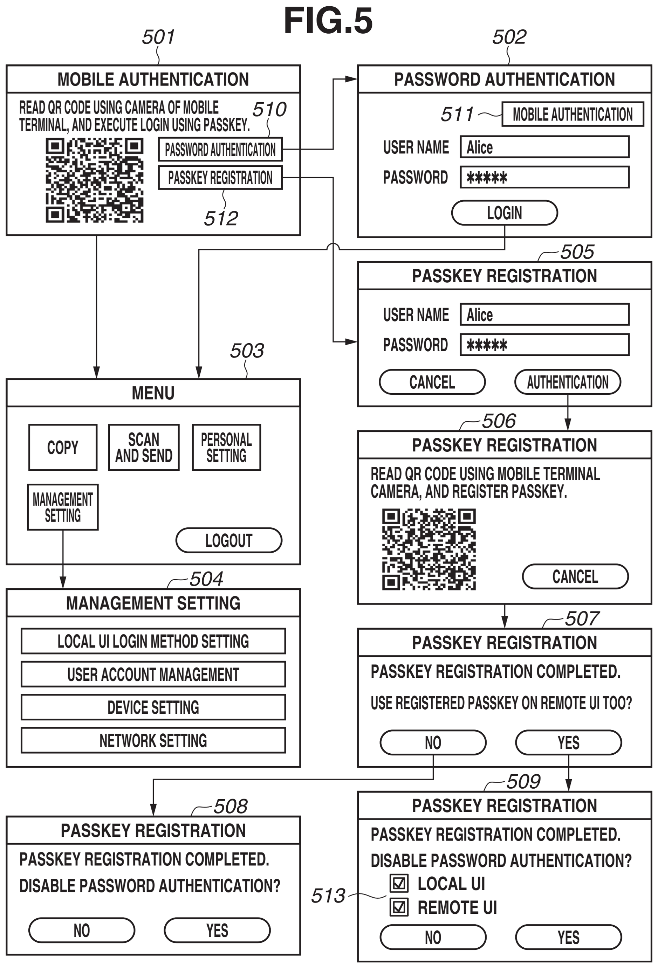

Next, a user authentication function included in the MFP 101 will be described with reference to Figs. 5, 6, 7, and 8.

### (User Authentication Function of Local UI)

Fig. 5 is a diagram of an example of a login screen of a local UI that is to be displayed on the operation panel 205, a menu screen to be displayed after login, and a screen related to passkey registration.

Fig. 6 is a diagram of an example of a local UI login method and a setting screen for performing user account management, which are to be displayed on the operation panel 205.

The screens illustrated in Fig. 6 are displayed by a setting menu being selected from a management setting screen 504 illustrated in Fig. 5. For example, a local UI login method setting screen 601 is displayed by a "local UI login method setting" being selected.

On the local UI login method setting screen 601, a method of logging into an operation panel can be selected. In the present embodiment, it is assumed that "password authentication" and "mobile authentication (passkey authentication)" can be selected and enabled.

The password authentication provides a method of entering a user ID and a password to log in.

In the password authentication, a password authentication screen 502 is displayed on the operation panel 205 as a login screen, and the user is authenticated. The user ID and the password are entered via hardware keys provided on the operation panel 205 of the MFP 101, or software keys (not illustrated). The local login service 302 receives the entry of the user ID and the password via the hardware keys or the software keys. The local login service 302 then verifies whether user account information matching a combination of the received user ID and the password exists in the user database 401. In a case where the above-described matching user account information exists, the local login service 302 determines that user authentication has succeeded, and displays a menu screen to be displayed after login.

In the mobile authentication (passkey authentication), the local login service 302, the FIDO^{®} service 304, and the authenticator 312 of the mobile terminal 102 cooperatively authenticate the user using a technique that uses a public key infrastructure (PKI) defined by the FIDO^{®}, which is called "passkeys".

In a case where password authentication is enabled on the local UI login method setting screen 601, the MFP 101 displays the password authentication screen 502 on the operation panel 205 as a login screen, and is used to authenticate the user.

In a case where the mobile authentication (passkey authentication) is enabled, the MFP 101 also displays a mobile authentication screen 501 on the operation panel 205 as a login screen, and is used to authenticate the user.

In a case where both of password authentication and mobile authentication (passkey authentication) are enabled, the MFP 101 displays a password authentication display button 510 and a mobile authentication display button 511 displayed on a login screen, and enables the user to switch the display of the login screen (the password authentication screen 502/the mobile authentication screen 501) and use the login screen to authenticate.

The details of passkey registration and a passkey-based authentication method will be described below.

In a case where user authentication has succeeded by password authentication or mobile authentication (passkey authentication), the local login service 302 causes the user to log into the operation panel 205. When login succeeds, the local UI service 305 that has detected the user login displays a menu screen 503 on the operation panel 205. The local UI service 305 then provides a function premised on the user authentication.

Examples of the function premised on the user authentication include a print function with a predetermined print setting that is provided by the printer 206. For example, in a case where a user to whom a role of Administrator or GeneralUser is assigned is authenticated, printing with a color print setting becomes executable. In contrast, in a case where a user to whom a role of LimitedUser is allocated is authenticated, only printing with a monochrome print setting is permitted.

Examples of the function premised on the user authentication also include a function of transmitting image data obtained by scanning using the scanner 207 to an external apparatus. For example, in a case where a user to whom a role of Administrator or GeneralUser is allocated is authenticated, the function is provided.

Furthermore, examples of the function premised on the user authentication include a function of using an address book when a transmission destination of image data obtained by scanning the scanner 207 is designated. The address book is a list in which information regarding one or more transmission destinations are registered. For example, a user to whom a role of GeneralUser is allocated can select a transmission destination from the address book, and designate a transmission destination of image data. In addition, a user to whom a role of Administrator is allocated can not only select a transmission destination from the address book, but also register a new transmission destination into the address book and edit the address book.

Examples of the function premised on the user authentication also include a function of performing the settings of the MFP 101. As displayed on the management setting screen 504, the settings of the MFP 101 include the setting of a local UI login method, the setting related to each user account, the setting of a device, and the setting of a network. In a case where a user to whom a role of Administrator is assigned is authenticated, these setting functions are provided, and the settings of the MFP 101 can be performed. The setting of a device includes the settings related to jobs of printing and scanning, such as a setting indicating whether to display a history recorded in job execution, on the operation panel 205. The setting of a network also includes a setting such as a setting indicating whether to permit the usage of each printing protocol during printing.

### (User Authentication Function of Remote UI)

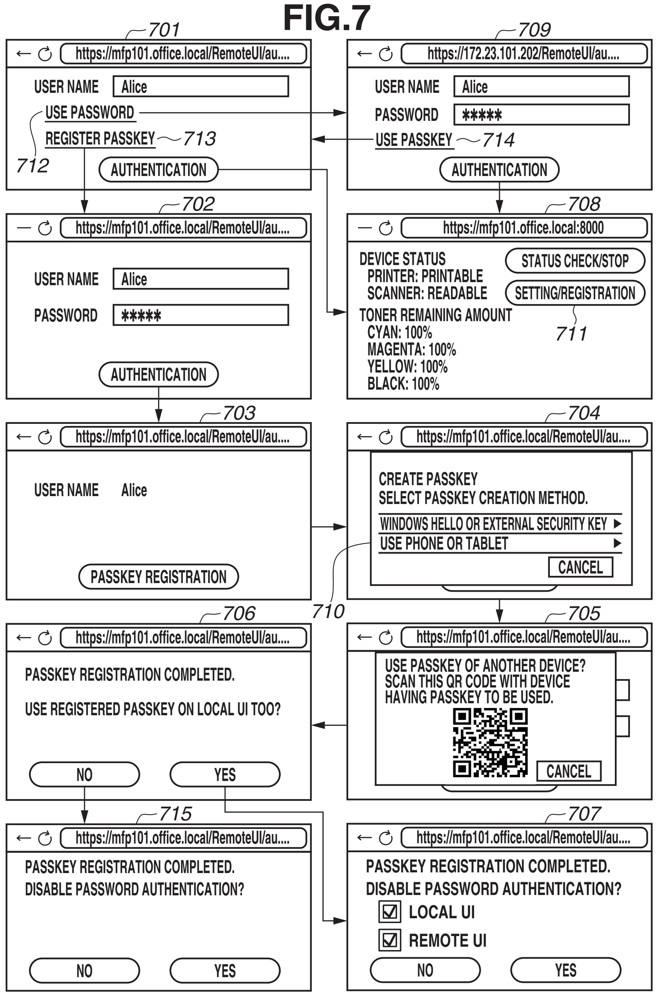

Fig. 7 is a diagram of an example of a remote UI login screen to be displayed on the web browser 317, and a device status screen and a screen related to passkey registration that are to be displayed after login.

Fig. 8 is a diagram of an example of a remote UI login method and a setting screen for performing user account management, which are to be displayed on the web browser 317.

The screens illustrated in Fig. 8 are displayed by pressing a setting registration menu 711 on a device status screen 708 illustrated in Fig. 7. On the screens illustrated in Fig. 8, screen display is also switched by a switching menu 810 being selected.

On a remote UI login method setting screen 801, a method of logging into the remote login service 303 can be selected. In the present embodiment, "password authentication" cannot be disabled from the remote UI login method setting screen 801, but "mobile authentication (passkey authentication)" can be enabled/disabled.

The password authentication provides a method of logging into the remote login service 303 by entering a user ID and a password.

Specifically, the remote login service 303 displays a password authentication screen 709 on the web browser 314 of the information processing apparatus 105 as a login screen. The user can enter a user ID and a password with a keyboard or the like that is provided on the information processing apparatus 105. When the remote login service 303 receives a user ID and a password via HTTP communication, the remote login service 303 verifies whether user account information matching a combination of the received user ID and the password exists in the user database 401. In a case where the above-described matching user account information exists, the remote login service 303 then determines that user authentication has succeeded and displays the device status screen 708 to be displayed after login, on the web browser 314.

In the mobile authentication (passkey authentication), the remote login service 303, the FIDO^{®} service 304, the authenticator 316 of the information processing apparatus 105 or the authenticator 312 of the mobile terminal 102 cooperatively authenticate the user by a technique that uses the PKI defined by the FIDO^{®}, which is called "passkey".

In a case where the mobile authentication (passkey authentication) is enabled, a passkey authentication screen 701 is displayed on the web browser 317 as a login screen, to allow the user to be authenticated. In a case where user authentication has succeeded by password authentication or mobile authentication (passkey authentication), the remote login service 303 causes the user to log into a screen displayed on the web browser 317. When login succeeds, the remote UI service 306 that has detected the user login displays the device status screen 708 on the web browser 317.

### <FIDO^{®} Service Function>

The FIDO^{®} service 304 is equipped with a web server function that enables communication in accordance with the HTTP. The FIDO^{®} service 304 is also equipped with an authentication function of the FIDO^{®} alliance or the WebAuthn defined by the W3C. That is to say, the FIDO^{®} service 304 may also be known as an authentication service, i.e., a service capable of authenticating a user, preferably, through passkeys or similar.

The FIDO^{®} service 304 is accessed from the web browser 317 of the information processing apparatus 105 by HTTP secure (HTTPS) communication. The FIDO^{®} service 304 provides, for example, a function of accessing the following uniform resource locators (URLs) 1 to 3 as a web server.
URL 1: https://MFP101.office.local/RemoteUI/registration/

The URL 1 is a URL for returning a HyperText Markup Language (HTML) for passkey registration. The URL 1 is associated with a "passkey registration" button on a passkey registration screen 703 to be described below.

The HTML for passkey registration that is to be returned by the URL 1 encompasses JavaScript for accessing a Representational State Transfer (REST) API of the URLs 2 and 3 to be described below. The HTML for passkey registration also encompasses the following JavaScript of WebAuthn defined by FIDO2.0.
Output JSON data = await navigator.credentials.create(input JSON data);
URL 2: https://MFP101.office.local/RemoteUl/registration/challenge

The URL 2 includes a URL of the REST API for returning input JSON data for inputting the API of the above-described navigator.credentials.create(). The input JSON data includes challenge data issued by the FIDO^{®} service 304. The challenge corresponds to random numbers.
URL 3: https://MFP101.office.local/RemoteUl/registration/verification

The URL 3 is a URL of the REST API for the FIDO^{®} service 304 receiving information for passkey registration, and output JSON data output by the API of the above-described navigator.credentials.create() is received. The output JSON data includes a credential ID, a challenge, a public key, a transport, a digital signature, and the like that have been issued by the mobile terminal 102.
URL 4: https://MFP101.office.local/LocalUl/authentication/random numbers

The URL 4 is a URL for returning the HTML for passkey authentication. URL 4 may be embedded into a QR code^{®} displayed on the mobile authentication screen 501.

The random numbers included in the URL 4 correspond to a character string like "b15dee080a1a549be6e3c74e6b59f5c5", for example. The HTML for passkey authentication that is to be returned from the URL 4 encompasses JavaScript for accessing the REST API of URLs 5 and 6, and encompasses the following JavaScript of WebAuthn defined by FIDO2.0.
Output JSON data = await navigator.credentials.get(input JSON data);
URL 5: https://MFP101.office.local/LocalUl/authentication/challenge

The URL 5 is a URL of the REST API for returning input JSON data for inputting the above-described navigator.credentials.get(). The input JSON data includes a challenge issued by the FIDO^{®} service 304. The challenge corresponds to random numbers.
URL 6: https://MFP101.office.local/LocalUI/authentication/verification

The URL 6 is a URL of the REST API for the FIDO^{®} service 304 receiving information for passkey authentication, and output JSON data output by the API of the above-described navigator.credentials.get() is received. The output JSON data includes the credential ID, the challenge, the digital signature, and the like of passkey that have been used for digital signature.

### <Passkey Registration Sequence>

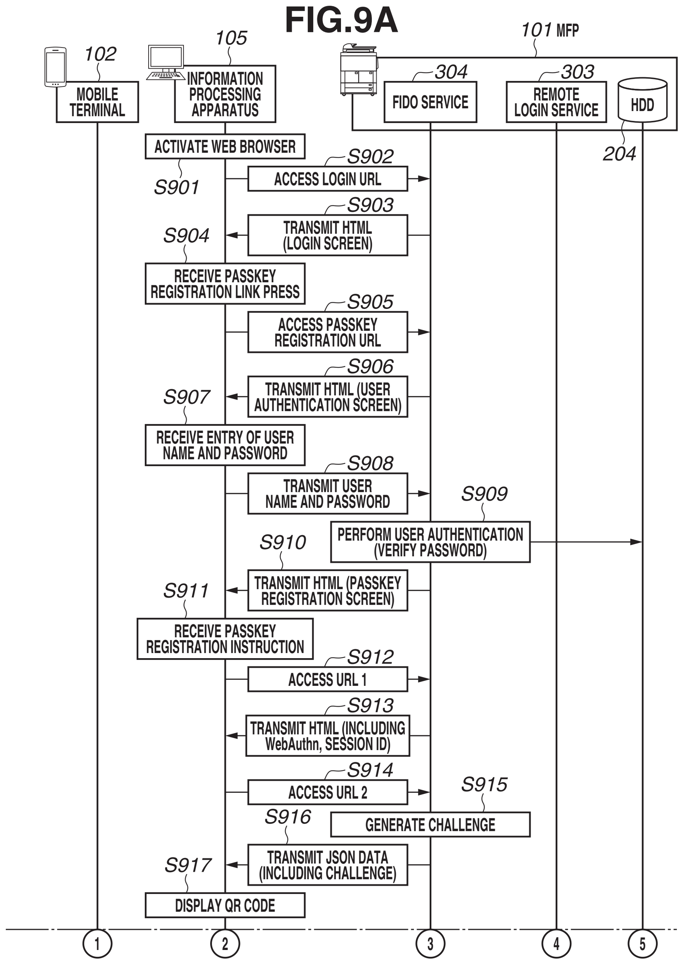

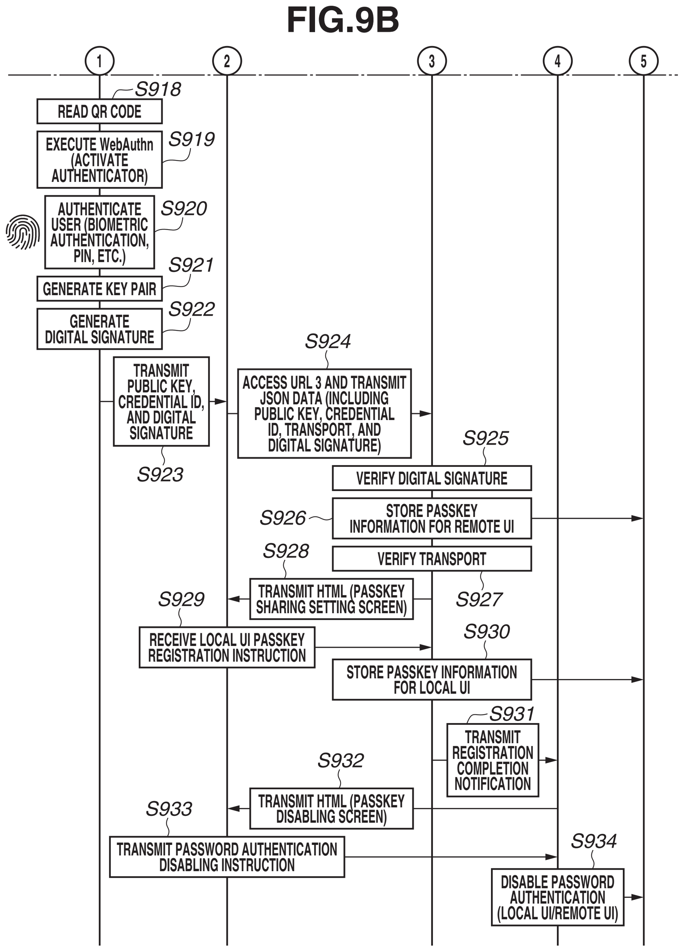

A processing flow related to passkey registration will be described with reference to a sequence diagram in Figs. 9A and 9B.

Figs. 9A and 9B are diagrams of examples of a sequence of passkey registration of a remote UI.

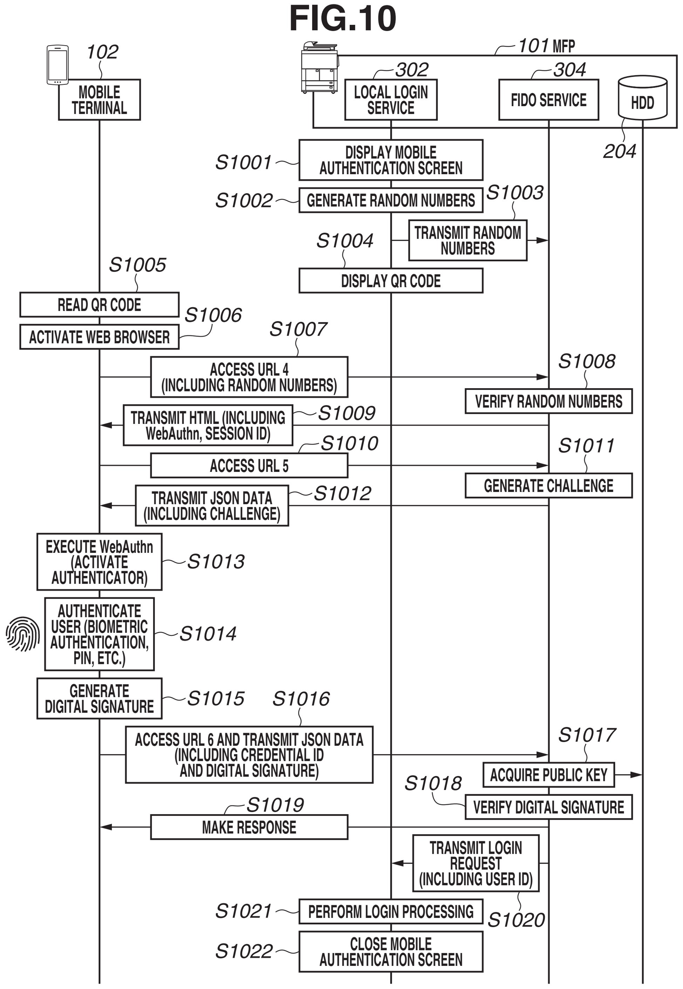

The processing to be performed by the MFP 101 in the sequences illustrated in Figs. 9A and 9B and Fig. 10 to be described below is implemented by the CPU 201 of the MFP 101 reading out and executing a program stored in the HDD 204 or the like. The processing to be performed by the mobile terminal 102 is also implemented by the CPU 211 of the mobile terminal 102 reading out and executing a program stored in the flash storage 214 or the like. The processing to be performed by the information processing apparatus 105 is also implemented by the CPU 221 of the information processing apparatus 105 reading out and executing a program stored in the flash storage 224 or the like.

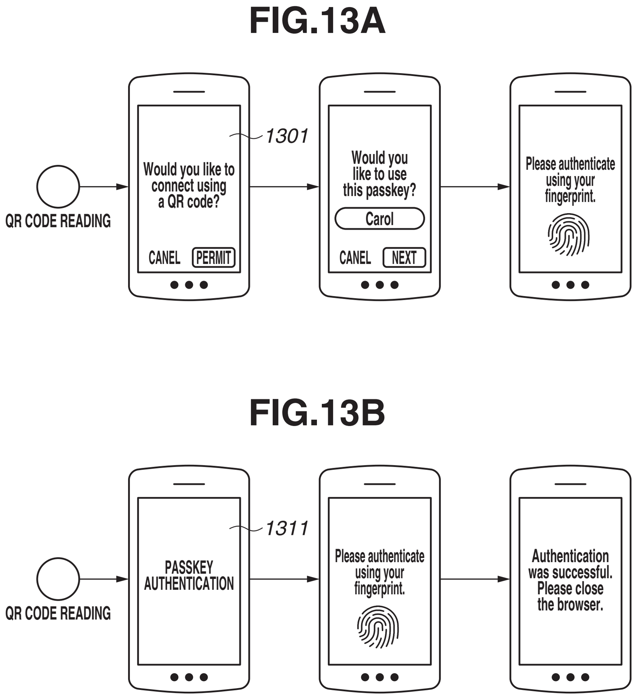

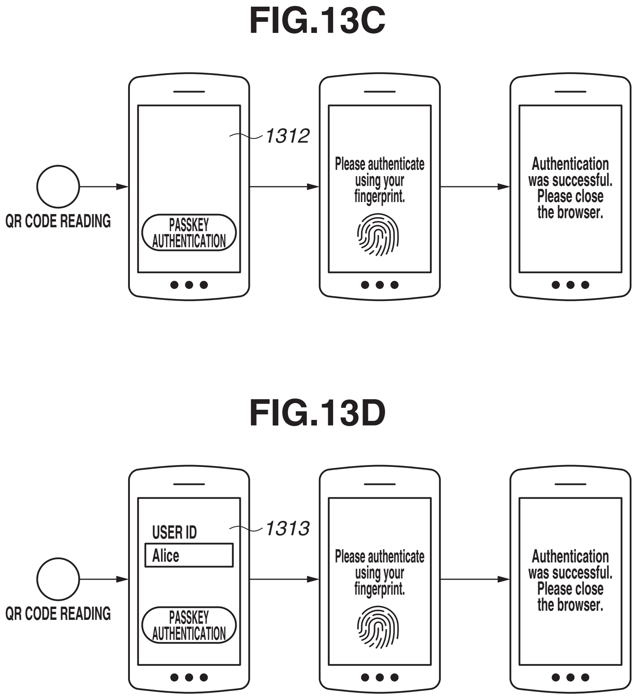

Fig. 13A is a diagram of an example of an operation screen of the mobile terminal 102 that is to be displayed at a time of passkey authentication.

In step S901, when the user launches the web browser 317 of the information processing apparatus 105 and enters a login URL of a remote UI into a URL entry field, the web browser 317 of the information processing apparatus 105 advances the processing to step S902.

In step S902, the web browser 317 of the information processing apparatus 105 accesses the above-described login URL. When the FIDO^{®} service 304 of the MFP 101 detects the access to the above-described login URL, the FIDO^{®} service 304 advances the processing to step S903.

In step S903, the FIDO^{®} service 304 of the MFP 101 transmits an HTML for displaying the passkey authentication screen 701, to the web browser 317 of the information processing apparatus 105. If the web browser 317 of the information processing apparatus 105 receives this HTML, the web browser 317 display the passkey authentication screen 701 in accordance with the HTML.

In step S904, when the web browser 317 of the information processing apparatus 105 detects the press on a link 713 for the user registering a passkey, the web browser 317 advances the processing to step S905.

In step S905, the web browser 317 of the information processing apparatus 105 accesses a passkey registration URL. When the FIDO^{®} service 304 of the MFP 101 detects the access to the above-described passkey registration URL, the FIDO^{®} service 304 advances the processing to step S906.

In step S906, the FIDO^{®} service 304 of the MFP 101 transmits an HTML for displaying the user authentication screen 702, to the web browser 317 of the information processing apparatus 105. When the web browser 317 of the information processing apparatus 105 receives this HTML, the web browser 317 displays the user authentication screen 702 in accordance with the HTML.

In step S907, when the web browser 317 of the information processing apparatus 105 detects the entry of a username and a password that are made by the user, and a press of an authentication button, the web browser 317 advances the processing to step S908.

In step S908, the web browser 317 of the information processing apparatus 105 transmits the above-described entered username and the password to the FIDO^{®} service 304 of the MFP 101. When the FIDO^{®} service 304 of the MFP 101 receives the username and the password, the FIDO^{®} service 304 advances the processing to step S909.

In step S909, the FIDO^{®} service 304 of the MFP 101 performs user authentication by collating a combination of the above-described received username (user ID) and the password with user account information stored in a user database stored in the HDD 204.

In a case where the user authentication has failed, the FIDO^{®} service 304 of the MFP 101 issues an error notification (not illustrated) to the web browser 317 of the information processing apparatus 105.

In contrast, in a case where the user authentication has succeeded, the FIDO^{®} service 304 of the MFP 101 advances the processing to step S910.

In step S910, the FIDO^{®} service 304 of the MFP 101 transmits an HTML for displaying the passkey registration screen 703, to the web browser 317 of the information processing apparatus 105. When the web browser 317 of the information processing apparatus 105 receives the HTML, the web browser 317 displays the passkey registration screen 703 in accordance with the HTML.

In step S911, when the web browser 317 of the information processing apparatus 105 detects the user's press on a "passkey registration button", the web browser 317 advances the processing to step S912.

In step S912, the web browser 317 of the information processing apparatus 105 accesses the URL 1. When the FIDO^{®} service 304 of the MFP 101 detects the access to the URL 1, the FIDO^{®} service 304 advances the processing to step S913.

In step S913, the FIDO^{®} service 304 of the MFP 101 verifies the accessed URL 1, and returns an HTML for displaying an HTML screen 704 for passkey registration, to the web browser 317 of the information processing apparatus 105. The HTML for passkey registration encompasses the JavaScript for accessing the REST API of the URLs 2 and 3, and the following JavaScript of WebAuthn defined by FIDO2.0.
Output JSON data = await navigator.credentials.create(input JSON data);

A header of a communication packet returned in step S913 also includes a session ID to be stored into a Cookie of the web browser 317. The session ID is used to confirm that access to the URL 1, and subsequent access to the URLs 2 and 3 are performed in the same session. In a case where the URL 2 or the URL 3 is directly accessed in a state in which a session ID is not stored in a Cookie, the FIDO^{®} service 304 can return an error without performing request processing.

The web browser 317 that has received the above-described HTML in step S913 displays a passkey creation method selection screen 704 (the HTML screen 704 for passkey registration) in accordance with the HTML, and allows the user to select a passkey creation method.

When it is detected that the user has selected a "use phone or tablet" 710 as a passkey creation method, the processing proceeds to step S914.

In step S914, the web browser 317 of the information processing apparatus 105 executes JavaScript included in the above-described HTML for passkey registration and accesses the URL 2.

In step S915, the FIDO^{®} service 304 that has received the access to the URL 2 performs generation of a challenge. The challenge corresponds to random numbers.

In step S916, the FIDO^{®} service 304 of the MFP 101 returns input JSON data including the above-described challenge generated in step S915, to the web browser 317 of the information processing apparatus 105. Aside from the above-described challenge, the input JSON data includes information regarding a server (e.g., a host name and a domain name like "MFP101.office.local"), a user ID, and the like.

When the web browser 317 of the information processing apparatus 105 receives the above-described input JSON data, the web browser 317 advances the processing to step S917.

In step S917, the web browser 317 executes the following JavaScript of WebAuthn using the above-described received input JSON data, generates a QR code^{®}, and displays a QR screen 705.
Output JSON data = await navigator.credentials.create(input JSON data);

In step S918, the user launches the camera application 313 from the mobile terminal 102 owned by the user and scans the above-described QR code^{®} displayed on the web browser 317.

In step S919, the camera application 313 of the mobile terminal 102 reads the above-described scanned QR code^{®} and displays a connection screen 1301 (Fig. 13A) based on the read data. When the user presses a "permit" button on the connection screen 1301, the mobile terminal 102 starts pairing and communication between the information processing apparatus 105 and Bluetooth^{®} Low Energy (BLE) using the data read from the QR code^{®} and launches the authenticator 312.

In step S920, the authenticator 312 of the mobile terminal 102 authenticates an owner of the mobile terminal 102 by any method of face authentication, fingerprint authentication, a passcode, pattern authentication, and the like. For example, the authenticator 312 asks the user to input a fingerprint, and when the user inputs a fingerprint, user authentication is performed based on the fingerprint. When the user authentication succeeds, the authenticator 312 advances the processing to step S921.

In step S921, the authenticator 312 generates a key pair (secret key and public key of the PKI) called a passkey, and a credential ID for identifying a passkey, and stores the key pair and the credential ID into a tamper-resistance storage region in association with information regarding a server (e.g., MFP101.office.local) and a user ID.

In step S922, the authenticator 312 performs digital signature on data including challenge data received from the information processing apparatus 105, using the generated secret key.

In step S923, the authenticator 312 returns the generated public key, the credential ID, the digital signature, and the like to the web browser 317 of the information processing apparatus 105.

When the web browser 317 of the information processing apparatus 105 receives the generated public key, the credential ID, the digital signature, and the like, the web browser 317 advances the processing to step S924.

In step S924, the web browser 317 accesses the URL 3, and transmits output JSON data including a public key, a credential ID, a transport, and digital signature, to the FIDO^{®} service 304.

After the FIDO^{®} service 304 of the MFP 101 receives the above-described output JSON data, the FIDO^{®} service 304 advances the processing to step S925.

In step S925, the FIDO^{®} service 304 verifies the digital signature using the challenge issued by the FIDO^{®} service 304 in step S915 described above, and the above-described received public key. Specifically, the FIDO^{®} service 304 verifies whether the digital signature is the same as the challenge issued by itself, by decoding the digital signature using the received public key. In a case where the digital signature is the same as the challenge, the FIDO^{®} service 304 determines that digital signature verification has succeeded. In a case where the digital signature is not the same as the challenge, the FIDO^{®} service 304 determines that digital signature verification has failed. In a case where digital signature verification has succeeded, the FIDO^{®} service 304 advances the processing to step S926.

In step S926, the FIDO^{®} service 304 stores passkey information (public key, credential ID) into a user database in the HDD 204 as passkey information for a remote UI in association with the user ID.

In step S927, the FIDO^{®} service 304 performs verification of the above-described transport.

In a case where the above-described transport is hybrid, the FIDO^{®} service 304 transmits, in step S928, an HTML for displaying a passkey sharing setting screen 706, to the web browser 317 of the information processing apparatus 105.

When the web browser 317 of the information processing apparatus 105 receives the above-described HTML, the web browser 317 displays the passkey sharing setting screen 706 in accordance with the HTML.

In step S929, when the web browser 317 receives a local UI passkey registration instruction (a press of a "YES" button on the passkey sharing setting screen 706) from the user, the web browser 317 transmits the local UI passkey registration instruction to the FIDO^{®} service 304 of the MFP 101.

When the FIDO^{®} service 304 of the MFP 101 receives the above-described local UI passkey registration instruction, the FIDO^{®} service 304 advances the processing to step S930.

In step S930, the FIDO^{®} service 304 stores passkey information (public key, credential ID) into a user database in the HDD 204 as passkey information for a local UI in association with the user ID.

In step S931, the FIDO^{®} service 304 transmits a passkey registration completion notification to the remote login service 303.

When the remote login service 303 receives the above-described passkey registration completion notification, the remote login service 303 advances the processing to step S932.

In step S932, the remote login service 303 transmits a screen 707 for selecting whether to disable password authentication as for an interface of which passkey registration has been completed, to the web browser 317 of the information processing apparatus 105.

The web browser 317 of the information processing apparatus 105 receives and displays the above-described screen 707 for selecting whether to disable password authentication.

When the web browser 317 detects that the user has selected (checked) an interface for disabling password authentication and pressed a "YES" button on the screen 707 for selecting whether to disable password authentication, the web browser 317 transmits, in step S933, an instruction to disable password authentication to the remote login service 303 of the MFP 101.

When the remote login service 303 receives an instruction to disable password authentication, the remote login service 303 checks whether a local UI and a remote UI in the instruction are checked. In step S934, the remote login service 303 then stores disabling of password authentication into a user database in the HDD 204 in association with the user ID, as for a checked item. The user having disabled password authentication can no longer execute login with a user ID and a password thereafter, and the MFP 101 performs control such that the user can log into a local UI or a remote UI only with mobile authentication (passkey authentication).

The enabling/disabling of password authentication of each user, check of a passkey registration state, and deregistration can be performed on the user information change editing screen 803 (Fig. 8).

The user information change editing screen 803 is a screen on which an administrator user to whom the role of Administrator is allocated, the user having authority of being able to change a management setting of the MFP 101, can browse and edit user information.

When the authentication service 301 authenticates the administrator user to whom the Administrator role is allocated and the user logs into a remote UI, the remote UI service 306 displays the device status screen 708 (Fig. 7). When the remote UI service 306 receives the selection of the setting registration menu 711 on the device status screen 708, the remote UI service 306 also displays the remote UI login method setting screen 801. When the remote UI service 306 receives the selection of "user account management" from the switching menu 810 on the remote UI login method setting screen 801, the remote UI service 306 displays the user account management screen 802. On the user account management screen 802, an administrator selects a user of which user information is desired to be edited, and presses an "edit" button. When the remote UI service 306 detects the press of the "edit" button, the remote UI service 306 displays the user information change editing screen 803 of the selected user.

When the authentication service 301 authenticates a general user to which a role of GeneralUser is allocated and the user logs into a remote UI, the remote UI service 306 performs control in such a manner as not to receive the selection of a management setting. Thus, the general user cannot browse the user account management screen 802. When the selection of the setting registration menu 711 displayed on the device status screen 708 is received from the general user, the remote UI service 306 displays the user information change editing screen 803 of the account of the logged in general user.

On the user information change editing screen 803, it is possible to enable disabled password authentication again by pressing an "enable" button 804. In a case where a passkey has been registered and password authentication is enabled, disabling of password authentication is made executable by displaying a "disable" button in place of the "enable" button 804. In a case where a passkey has not been registered, the user loses a login method when password authentication is disabled, and therefore disabling of password authentication can be made inexecutable in a case where a passkey has not been registered.

In a case where a passkey has been registered, the registered passkey can be deleted by pressing a "deregister" button 805. When the registered passkey is deleted, the user becomes unable to execute login using the passkey. Thus, in a case where password authentication is disabled, it is desirable to automatically enable the disabled password authentication. In a case where a passkey has not been registered, "unregistered" is also displayed as a passkey registration state. In a case where a passkey has not been registered, the "deregister" button 805 is grayed out, or not displayed.

Although details will be omitted, the login method setting screen 601, the user account management screen 602, and the user account editing screen 603 illustrated in Fig. 6 are screens to be displayed on the operation panel 205, and functions thereof are similar to those of the login method setting screen 801, the user account management screen 802, and the user information change editing screen 803 illustrated in Fig. 8.

As described above, the FIDO^{®} service 304 displays a QR code^{®} for registration on the web browser 317 (password authenticated) of an external apparatus (information processing apparatus 105) that accesses the MFP 101 via a network, the user reads this QR code^{®} using the mobile terminal 102, and authentication is performed by the authenticator 316 of the mobile terminal 102. When the authentication succeeds, the authenticator 316 generates a digital signature for data including a pair of a secret key and a public key, and challenge data generated by the FIDO^{®} service 304, based on the authentication success, and transmits the public key, the digital signature, and the like to the FIDO^{®} service 304 as passkey information. The FIDO^{®} service 304 then receives the passkey information, verifies the received passkey information, and registers the passkey information into the user database in association with a remote UI. It is thereby possible to perform passkey registration for setting authentication that uses an authentication function of the mobile terminal, for a remote UI. When a passkey is registered on a remote UI, the FIDO^{®} service 304 also receives user selection as to whether to use the passkey information of the remote UI on a local UI, from the web browser 317, and in a case where the use on the local UI is selected, the passkey information of the remote UI is also registered into the user database in association with the local UI. It is thereby possible to perform passkey registration for setting authentication that uses an authentication function of the mobile terminal, also for the local UI. In this manner, it becomes possible to register a passkey registered on a remote UI, also in a local UI.

When a passkey of a remote UI is registered, in a case where a passkey of a local UI has already been registered for the user, the screen 707 for selecting whether to disable password authentication can also be displayed without displaying the passkey sharing setting screen 706 (i.e., without receiving passkey sharing user selection).

### <Passkey Authentication Sequence>

Hereinafter, processing of logging into a local UI using a passkey registered in step S930 in Fig. 9B will be described with reference to a sequence diagram in Fig. 10.

Fig. 10 is a diagram of an example of a processing sequence of logging into a local UI using a passkey.

Fig. 13B is a diagram of an example of an operation screen of the mobile terminal 102 that is to be displayed at the time of passkey authentication.

In step S1001, in a case where the user has not logged into a UI, the local login service 302 starts the display of the mobile authentication screen 501. For example, when a user who has logged in logs out, the local login service 302 displays the mobile authentication screen 501. The local login service 302 may also be configured to display the mobile authentication screen 501 when the power of the MFP 101 is input, that is to say when the MFP is turned on or when the MFP leaves a stand-by mode.

In step S1002, the local login service 302 generates random numbers. The random numbers correspond to a character string like "b15dee080a1a549be6e3c74e6b59f5c5", for example.

In step S1003, the local login service 302 performs sharing by transmitting the generated random numbers to the FIDO^{®} service 304. A transmission method can be a method of using an API or sharing random numbers by temporarily storing the random numbers into the RAM 203 or the HDD 204, and the transmission method and a transmission timing are not specifically limited. A configuration can also be employed in which the generation of random numbers is performed by the FIDO^{®} service 304 or another module instead of the local login service 302, and the random numbers are shared with the local login service 302.

In step S1004, the local login service 302 generates a QR code^{®}, and performs display control in such a manner as to display the QR code^{®} on the mobile authentication screen 501. The data of the URL 4 including the random numbers generated in step S1002 described above is embedded in the QR code^{®}. The random numbers are information that can be known only by a user who has scanned the QR code^{®}, and are intended to check that the user accessing the URL 4 exists in front of the operation panel.

In step S1005, the user launches the camera application 313 from the mobile terminal 102 owned by the user, and scans the above-described QR code^{®} in step S1004 that is displayed on the operation panel 205.

In step S1006, the camera application 313 launches the web browser 314.

In step S1007, the web browser 314 accesses an address of the acquired URL 4 from the QR code^{®}.

In step S1008, the FIDO^{®} service 304 of the MFP 101 detects access to the URL 4. The accessed URL is verified, and in a case where the random numbers acquired in step S1003 described above are not included in the accessed URL, an error such as "HTTP 404 Not Found" is returned to the web browser 314. In contrast, in a case where the random numbers acquired in step S1003 described above are included in the accessed URL, the FIDO^{®} service 304 of the MFP 101 advances the processing to step S1009.

In step S1009, the FIDO^{®} service 304 returns an HTML for displaying an HTML screen 1311 for passkey authentication (Fig. 13B), to the web browser 314 of the mobile terminal 102. In the FIDO^{®} service 304, an HTML for passkey authentication encompasses JavaScript for accessing a REST API of the URLs 5 and 6. In the FIDO^{®} service 304, an HTML for passkey authentication encompasses the following JavaScript of WebAuthn defined by the FIDO2.0.

### <JavaScript of WebAuthn>

Output JSON data = await navigator.credentials.get(input JSON data);
When the web browser 314 of the mobile terminal 102 receives the HTML for passkey authentication that has been returned from the FIDO^{®} service 304 in step S1009 described above, the web browser 314 displays the HTML screen 1311 for passkey authentication. In the FIDO^{®} service 304, a header of a communication packet returned in step S1009 described above includes a session ID to be stored in a Cookie of the web browser 314. The session ID is used to check whether access to the URL 4 of which random numbers have been verified in step S1008 described above, and subsequent access to the URLs 5 and 6 are performed in the same session. In a case where the URL 5 or the URL 6 is directly accessed in a state in which a session ID is not stored in a Cookie, the FIDO^{®} service 304 can return an error without performing request processing.

When the web browser 314 displays the HTML screen 1311 for passkey authentication, it is desirable that JavaScript encompassed in the HTML for passkey authentication is automatically executed without a web browser operation of the user, and the URL 5 is accessed. By using an onload event of JavaScript to be called at a timing at which an HTML on the HTML screen 1311 is entirely read by the web browser 314, it is possible to automatically execute JavaScript.

In step S1011, the FIDO^{®} service 304 that has received the access to the URL 5 generates a challenge. The challenge corresponds to random numbers.

In step S1012, the FIDO^{®} service 304 returns input JSON data including the challenge generated in step S1011 described above, to the web browser 314. The input JSON data also includes information regarding a server of the MFP 101 (e.g., a host name and a domain name like "MFP101.office.local"), and the like.

When the web browser 314 receives the response in step S1011 described above, the web browser 314 advances the processing to step S1013.

In step S1013, the web browser 314 executes the following JavaScript of WebAuthn using the received input JSON data, and launches the authenticator 312. In a case where the authenticator 312 manages a plurality of passkeys in association with the information regarding the server of the MFP 101, a screen for selecting one passkey from among the plurality of passkeys is displayed in some cases.

### <JavaScript of WebAuthn>

Output JSON data = await navigator.credentials.create(input JSON data);
In step S1014, the authenticator 312 authenticates an owner of the mobile terminal 102 by any method of face authentication, fingerprint authentication, a passcode, pattern authentication, and the like. For example, the authenticator 312 asks the user to input a fingerprint, and when the user inputs a fingerprint, user authentication is performed based on the fingerprint. When the user authentication succeeds, the authenticator 312 advances the processing to step S1015.

In step S1015, the authenticator 312 acquires a passkey (secret key of PKI) stored in association with information regarding the server of the MFP 101 (e.g., MFP101.office.local) that is included in the input JSON data received in step S1011 described above. The authenticator 312 then generates a digital signature for data including the challenge received in step S1012 described above, using the above-described secret key of the PKI. The authenticator 312 then returns output JSON data to the web browser 314. The authenticator 312 includes the above-described digital signature, a credential ID of a passkey used in the above-described digital signature, and the like, in the output JSON data.

When the web browser 314 receives the output JSON data from the authenticator 312, the web browser 314 advances the processing to step S1016.

In step S1016, the web browser 314 accesses the URL 6 by JavaScript included in the above-described HTML for passkey authentication, and transmits output JSON data including a public key, a credential ID, and a digital signature, to the FIDO^{®} service 304.

When the FIDO^{®} service 304 detects access to the URL 6, the FIDO^{®} service 304 advances the processing to step S1017.

In step S1017, the FIDO^{®} service 304 refers to a user database in the HDD 204, and acquires a user ID and a public key of an account associated with a credential ID included in the above-described received output JSON data.

In step S1018, the FIDO^{®} service 304 verifies "the digital signature received in step S1016", using "the challenge issued by the FIDO^{®} service 304 in step S1011" and "the public key acquired from the user database in step S1017". Specifically, by decoding the digital signature using the public key, the FIDO^{®} service 304 verifies whether the digital signature is the same as the challenge issued by the FIDO^{®} service 304. In a case where the digital signature is the same as the challenge issued by the FIDO^{®} service 304, and digital signature verification has succeeded, it is determined that authentication has succeeded. In contrast, in a case where digital signature verification has failed, it is determined that authentication has failed.

In step S1019, the FIDO^{®} service 304 makes a response indicating whether authentication has succeeded or failed, to the web browser 314. The web browser 314 receives a response indicating whether authentication has succeeded or failed, from the FIDO^{®} service 304.

In addition, in a case where authentication has succeeded in step S1018 described above, in step S1020, the FIDO^{®} service 304 transmits a request to log into an operation panel, to the local login service 302. The login request includes the user ID.

When the local login service 302 receives the request, the local login service 302 advances the processing to step S1021.

In step S1021, the local login service 302 performs login processing for causing a user with a user ID designated in the login request in step S1020 described above, to log into the operation panel. Specifically, the local login service 302 refers to the user database in the HDD 204, and acquires user information, such as a user ID, a role, and an e-mail address of an account to be caused to log into the operation panel. The local login service 302 also notifies the local UI service 305 of a login occurrence event. The login event includes information regarding the user to be caused to log into the operation panel.

Lastly, in step S1022, the local login service 302 closes the mobile authentication screen 501 displayed in step S1001 described above, and the local UI service 305 displays the menu screen 503, and ends the login processing.

When the local UI service 305 succeeds in verification in step S1018 described above, the local UI service 305 provides functions premised on user authentication, to the user. The functions premised on user authentication that are to be provided in a case where verification has succeeded are as described above in the description of the user authentication function.

As described above, the local login service 302 displays a QR code^{®} for authentication on a local UI, the user reads this QR code^{®} using the mobile terminal 102, and authentication is performed by the authenticator 316 of the mobile terminal 102. When the authentication succeeds, the authenticator 316 generates signature data based on the authentication, and transmits the signature data to the FIDO^{®} service 304.

By the FIDO^{®} service 304 receiving the signature data, and verifying the received passkey information using passkey information registered in association with a local UI, it becomes possible to perform mobile authentication (passkey authentication) of the local UI.

Similarly, the remote login service 303 causes the web browser 317 of the information processing apparatus 105 (external device) that accesses the MFP 101 via a network to display a QR code^{®} for authentication. The user reads this QR code^{®} using the mobile terminal 102, and authentication is performed by the authenticator 316 of the mobile terminal 102. When the authentication succeeds, the authenticator 316 generates signature data based on this, and transmits the signature data to the FIDO^{®} service 304 via the web browser 317. By the FIDO^{®} service 304 receiving the signature data, and verifying the received passkey information using passkey information registered in association with a remote UI, it becomes possible to perform mobile authentication (passkey authentication) of the remote UI.

In a case where verification fails in step S1018 described above, the FIDO^{®} service 304 notifies, in step S1019 described above, the web browser 314 of a failure. As a failure notification, cases thereof include, for example, a case where "a designated user ID is not registered in a user DB", a case where "a public key of a passkey is not registered in association with the user ID", and a case where "digital signature verification has failed" in step S1018. In a case where verification has failed, the FIDO^{®} service 304 can also notify the local login service 302 of an error, and display an authentication failure message on the mobile authentication screen 501.

It is also desirable that random numbers stored in a QR code^{®} on the mobile authentication screen 501 are updated with new random numbers in a case where an authentication success or failure notification is received. Even in a case where an authentication success or failure notification is not received, it is safe that the lifetime of random numbers is made short by periodically updating random numbers.

In the above-described configuration, the description has been given of an example in which the web browser 314 that has completed the reception of the HTML on the HTML screen 1311 for passkey authentication in step S1009 described above automatically executes JavaScript upon receiving an onload event of JavaScript, and accesses the URL 5. Nevertheless, a screen including a "passkey authentication" button like an HTML screen 1312 for passkey authentication can be used in place of the HTML screen 1311 for passkey authentication, and the web browser 314 can execute JavaScript and access the URL 5 upon detecting the user's press on the "passkey authentication" button. Furthermore, a screen including a text field for entering a text field, like an HTML screen 1313 for passkey authentication can be used, and the web browser 314 can execute JavaScript and access the URL 5 upon detecting that the user has entered a user ID and pressed the "passkey authentication" button. In this case, the access to the URL 5 in step S1010 includes a user ID. The FIDO^{®} service 304 that has received this can acquire, from a user database, a credential ID associated with the user ID, and include the credential ID in the response in step S1012. With this configuration, even if the authenticator 312 manages a plurality of passkeys, a passkey to be used can be narrowed down to one from the credential ID.

### <Passkey Sharing Flowchart>

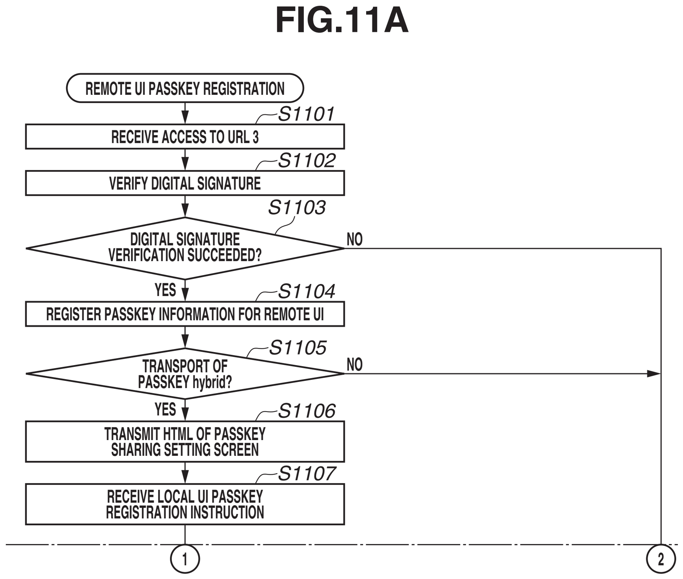

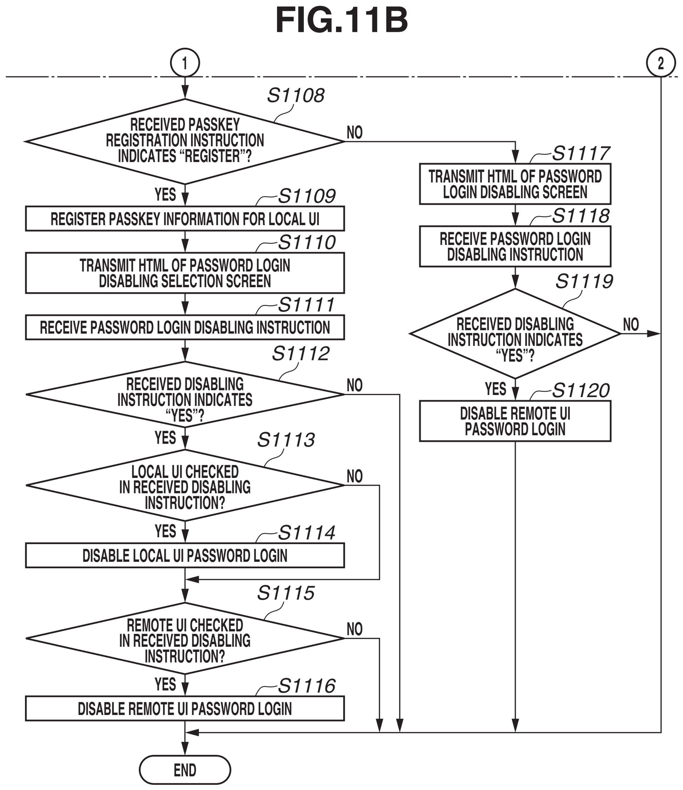

Figs. 11A and 11B are flowcharts illustrating processing of registering a passkey on a remote UI of the information processing apparatus 105. Specifically, details will be described of the processing in which the FIDO^{®} service 304 of the MFP 101 or the like receives access to the URL 3 in step S924 in Fig. 9B, and registers a passkey in steps S925 to S934. The processing to be performed by the MFP 101 in this flowchart is implemented by the CPU 201 of the MFP 101 reading out and executing a program stored in the HDD 204 or the like.

In step S1101, when the FIDO^{®} service 304 of the MFP 101 detects access to the URL 3, and receives output JSON data including a public key, a credential ID, a transport, and a digital signature, the FIDO^{®} service 304 advances the processing to step S1102.

In step S1102, the FIDO^{®} service 304 performs verification of the above-described received digital signature. By decoding the digital signature using the above-described received public key, the FIDO^{®} service 304 verifies whether the digital signature is the same as the challenge issued by the FIDO^{®} service 304 itself. In a case where the digital signature is the same as the challenge issued by the FIDO^{®} service 304, it is determined that digital signature verification has succeeded. In a case where the digital signature is not the same as the challenge, it is determined that digital signature verification has failed.

In step S1103, the FIDO^{®} service 304 determines whether the above-described digital signature verification has succeeded.

Here, in a case where digital signature verification has failed (NO in step S1103), the FIDO^{®} service 304 ends the processing in this flowchart.

In contrast, in a case where digital signature verification has succeeded (YES in step S1103), the FIDO^{®} service 304 advances the processing to step S1104.

In step S1104, the FIDO^{®} service 304 stores the passkey information (public key, credential ID) received in step S1101 described above, and the user ID in association with each other into the user database in the HDD 204 as passkey information for a remote Ul.

In step S1105, the FIDO^{®} service 304 verifies whether a transport (Transport information) of the above-described received passkey is hybrid. In a case where passkey authentication is executed on a local UI, personal authentication is performed using the mobile terminal 102, as described in steps S1005 to S1019 of Fig. 10. For this reason, only in a case where a transport is hybrid indicating a mobile terminal, the transport can be registered into a passkey of a local UI.

Here, in a case where a transport is not hybrid (NO in step S1005), the FIDO^{®} service 304 ends the processing in this flowchart.

In contrast, in a case where a transport is hybrid (YES in step S1005), the FIDO^{®} service 304 advances the processing to step S1106.

In step S1106, the FIDO^{®} service 304 transmits an HTML of the passkey sharing setting screen 706 to the web browser 317 of the information processing apparatus 105.

In step S1107, when the FIDO^{®} service 304 receives a user selection operation performed on the passkey sharing setting screen 706, from the web browser 317, the FIDO^{®} service 304 advances the processing to step S1108.

In step S1108, the FIDO^{®} service 304 determines the above-described received user selection operation.

Here, in a case where the user selection operation indicates "register" (i.e., "YES" is selected on the passkey sharing setting screen 706) (YES in step S1108), the FIDO^{®} service 304 advances the processing to step S1109.

In step S1109, the FIDO^{®} service 304 stores the above-described passkey information (public key, credential ID) and the user ID in association with each other into the user database in the HDD 204 as passkey information for a local UI. At this time, in a case where a passkey for a local UI has already been registered, the registered passkey can be overwritten, or the user can be enabled to select whether to overwrite the registered passkey.

After the FIDO^{®} service 304 stores the passkey information in step S1109 described above, the FIDO^{®} service 304 advances the processing to step S1110.

In step S1110, the remote login service 303 of the MFP 101 transmits an HTML of the screen 707 for disabling password authentication, to the web browser 317 of the information processing apparatus 105.

In step S1111, when the remote login service 303 receives a user selection operation performed on the screen 707 for disabling password authentication, from the web browser 317, the remote login service 303 advances the processing to step S1112.

In step S1112, the remote login service 303 determines the above-described received user selection operation.

Here, in a case where a user selection operation performed on the screen 707 for disabling password authentication indicates "NO" (NO in step S1112), the remote login service 303 ends the processing in this flowchart.

In contrast, in a case where a user selection operation performed on the screen 707 for disabling password authentication indicates "YES" (YES in step S1112), the remote login service 303 advances the processing to step S1113.

In step S1113, the remote login service 303 verifies whether a local UI is selected (checked) by the user selection operation.

Here, in a case where a local UI is selected (checked) (YES in step S1113), the remote login service 303 advances the processing to step S1114.

In step S1114, the remote login service 303 disables password authentication of the local UI, and advances the processing to step S1115.

In contrast, in a case where a local UI is not selected (checked) (NO in step S1113), the remote login service 303 directly advances the processing to step S1115.

In step S1115, the remote login service 303 verifies whether a remote UI is selected (checked) by a user selection operation on the screen 707 for disabling password authentication.

Here, in a case where a remote UI is selected (checked) (YES in step S1115), the remote login service 303 advances the processing to step S1116.

In step S1116, the remote login service 303 disables password authentication of the remote UI, and ends the processing in this flowchart.

In contrast, in a case where a remote UI is not selected (checked) (NO in step S1115), the remote login service 303 directly ends the processing in this flowchart.

In a case where it is determined in step S1108 described above that a user selection operation on the passkey sharing setting screen 706 indicates "not register" (i.e., "NO" is selected on the passkey sharing setting screen 706) (NO in step S1108), the FIDO^{®} service 304 advances the processing to step S1117.

In step S1117, the FIDO^{®} service 304 transmits an HTML of a password authentication disabling screen 715 to the web browser 317 of the information processing apparatus 105.

In step S1118, when the remote login service 303 of the MFP 101 receives a user selection operation performed on the password authentication disabling screen 715, from the web browser 317, the remote login service 303 advances the processing to step S1119.

In step S1119, the remote login service 303 determines the above-described received user selection operation.

Here, in a case where the user selection operation on the password authentication disabling screen 715 indicates "NO" (NO in step S1119), the remote login service 303 ends the processing in this flowchart.

In contrast, in a case where the user selection operation on the password authentication disabling screen 715 indicates "YES" (YES in step S1119), the remote login service 303 advances the processing to step S1120.

In step S1120, the remote login service 303 disables password authentication of the remote UI, and ends the processing in this flowchart.

In the above-described configuration, the description has been given of a method of registering, in a case where a passkey for remote UI login is registered, the passkey as a passkey for local UI login. Conversely, when a passkey for local UI login is registered, a passkey for remote UI login can be registered.

Hereinafter, a procedure for registering a passkey for remote UI login when a passkey for local UI login is registered will be briefly described with reference to Fig. 5.

When the press on a passkey registration button 512 on the mobile authentication screen 501 is detected, the FIDO^{®} service 304 displays the user authentication screen 505 on the operation panel 205. When it is detected that the user has entered a username and a password, and pressed an authentication button, the FIDO^{®} service 304 performs user authentication by comparing a combination of the entered username (user ID) and the password with user account information stored in the user database stored in the HDD 204. In a case where the user authentication has failed, the FIDO^{®} service 304 displays an error (not illustrated) on the operation panel 205. In contrast, in a case where the user authentication has succeeded, the FIDO^{®} service 304 generates a QR code^{®}, and displays a QR screen 506 including the QR code^{®} on the operation panel 205, the details of which will be omitted.

The user launches the camera application 313 from the mobile terminal 102 owned by the user, and scans the above-described QR code^{®} on the QR screen 506 displayed on the operation panel 205. The mobile terminal 102 then performs passkey registration of a local UI similarly to the above-described case of passkey registration for remote UI login, based on data read from the above-described scanned QR code^{®}. The mobile terminal 102 authenticates the owner by fingerprint authentication or the like, generates a key pair (secret key and public key of the PKI) called a passkey, and a credential ID, and stores the key pair and the credential ID into a tamper-resistance storage region in association with information regarding a server (e.g., MFP101.office.local) and a user ID, the details of which will be omitted. The mobile terminal 102 also transmits data including the public key, the credential ID, the transport, and the digital signature, to the FIDO^{®} service 304 of the MFP 101. When the FIDO^{®} service 304 receives the above-described data, the FIDO^{®} service 304 verifies the digital signature included in the data, and in a case where the verification has succeeded, the FIDO^{®} service 304 stores passkey information (public key, credential ID) in association with the user ID into the user database in the HDD 204 as passkey information for a local UI.

The FIDO^{®} service 304 displays a passkey sharing setting screen 507 on the operation panel 205 similarly to the above-described case of passkey registration for a remote UI login. When a "YES" button on the passkey sharing setting screen 507 is pressed, the FIDO^{®} service 304 stores passkey information (public key, credential ID) in association with the user ID into the user database in the HDD 204 as passkey information for a local UI. The FIDO^{®} service 304 then notifies the local login service 302 of passkey registration completion.

Similarly to the above-described case of passkey registration for remote UI login, the local login service 302 displays, on the operation panel 205, a screen 509 for selecting whether to disable password authentication as for an interface of which passkey registration has been completed.

When the user selects (checks) an interface for which password authentication is to be disabled, and presses a "YES" button on the screen 509, the local login service 302 stores disabling of password authentication into the user database in the HDD 204 in association with the user ID, as for a checked item.

When a "NO" button on the passkey sharing setting screen 507 is pressed, the local login service 302 displays a screen 508 as a screen for selecting whether to disable password authentication. When a "YES" button is pressed on the screen 508, the local login service 302 stores disabling of password authentication into the user database in the HDD 204 in association with the user ID, as for an item of a local UI. Accordingly, password authentication of the local UI can be disabled.

As described above, a passkey registered on a local UI can be registered also on a remote UI.

User selection of simultaneously registering a passkey on a plurality of user interfaces can also be received by displaying a screen like the passkey sharing setting screen 507 when the passkey registration button 512 on the mobile authentication screen 501 is pressed, or at a timing immediately before the display of the QR screen 506, or the like.

Similarly, user selection of simultaneously registering a passkey on a plurality of user interfaces can also be received by displaying a screen like the passkey sharing setting screen 706, when the link 713 for registering a passkey on the passkey authentication screen 701 or a passkey registration button on the passkey registration screen 703 is pressed, or at a timing immediately before the display of the passkey creation method selection screen 704, or the like.

When a passkey of a local UI is registered, the screen 509 for selecting whether to disable password authentication can also be displayed without displaying the passkey sharing setting screen 507 (i.e., without receiving passkey sharing user selection), in a case where a passkey of a remote UI has already been registered for the user.

In other words, when a passkey of any user interface is registered, in a case where a passkey of another user interface has already been registered for the user, a screen for selecting whether to disable password authentication can also be displayed without receiving passkey sharing user selection.

The user interface on which a passkey is registered is not limited to the remote UI and the local UI, and can be another interface. Authentication of mobile communication or the like can also be performed. Alternatively, when the MFP 101 includes three or more user interfaces and a passkey of any user interface is registered, the passkey can be registered also on the other two or more interfaces.

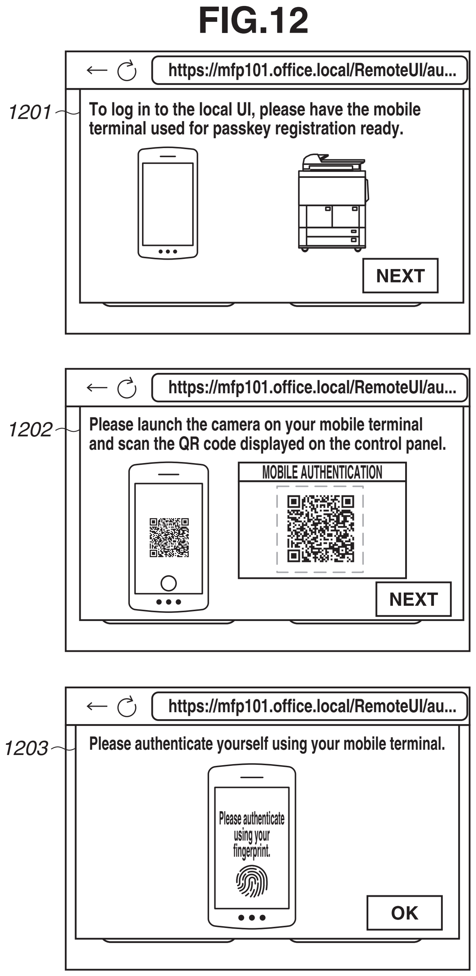

In some cases, an operation flow greatly varies between passkey authentication of a remote UI and passkey authentication of a local UI. In a case where an operation flow greatly varies in this manner, the user may get confused during a login operation even when a passkey is registered. To solve this, the FIDO^{®} service 304 may display (present), in step S1109 of Fig. 11, the following operation guide as illustrated in Fig. 12 on the operation panel 205 after passkey information for a local UI is stored into the HDD 204.

Fig. 12 is a diagram of an example of a user interface of guide display.

First of all, a device required for login is described on a screen 1201, and the user is notified that a mobile terminal is to be prepared. When the user presses a "NEXT" button on the screen 1201, the operation screen switches to a screen 1202.

On the screen 1202, a message indicating that a QR code^{®} on the operation panel is to be read by launching a camera application of the mobile terminal is displayed. When the user presses a "NEXT" button on the screen 1202, the operation screen switches to a screen 1203.

On the screen 1203, the user is notified that personal authentication (biometric authentication, and the like) is to be performed using the mobile terminal. With this configuration, the user can check a method of logging into a local UI, and the user is prevented from getting confused when passkey authentication is performed on the operation panel for the first time.

Similarly, in a case where a passkey of a local UI is registered and the passkey is to be registered on a remote UI, a screen as illustrated in Fig. 12 that guides a device to be prepared in passkey authentication of the remote UI, and its authentication method is displayed on the operation panel 205. With this configuration, the user can check a method of logging into a remote UI, and the user is prevented from getting confused when passkey authentication is performed from an external device for the first time.

### <Effect>

As described above, when the user registers a passkey on a remote UI, the same passkey is easily registered as a passkey for a local UI. For this reason, the user needs not separately register passkeys on the remote UI and the local UI (i.e., needs not perform passkey registration twice), the number of registration procedures is reduced, and operability significantly improves. The security of a login operation can also be improved by using a digital signature verification technique that uses a passkey used in the FIDO^{®}. In particular, the security of a plurality of login operations can be improved by executing a passkey registration operation once.

It is also possible to easily disable password authentication for each authentication for a user who has registered a passkey. By disabling password authentication, it is possible to eliminate security concerns such as a brute-force attack of passwords and password leak, and enhance safety.

When mobile authentication (passkey authentication) of a local UI has succeeded, in a case where a passkey of a remote UI has not been registered for the user, a selection screen like the passkey sharing setting screen 507 in Fig. 5 can be displayed together with a message indicating that "Passkey authentication has succeeded. Will you use the passkey also on the remote UI?", or the like, and in a case where "YES" is selected, passkey information registered in association with the above-described local UI for which mobile authentication has succeeded can also be stored into the user database in the HDD 204 in association with the user ID of the authenticated user as passkey information for a remote UI.

Similarly, when mobile authentication (passkey authentication) of a remote UI has succeeded, in a case where a passkey of a local UI has not been registered for the user, a selection screen like the passkey sharing setting screen 507 in Fig. 5 can be displayed together with a message indicating that "Passkey authentication has succeeded. Will you use the passkey also on the local UI?", or the like, and in a case where "YES" is selected, passkey information registered in association with the above-described remote UI for which mobile authentication has succeeded can also be stored into the user database in the HDD 204 in association with the user ID of the authenticated user as passkey information for a local UI.

On the above-described selection screen, a checkbox can be provided together with a message indicating "do not display again", and in a case where the checkbox is checked, a flag or the like may be set, and the selection screen may be prevented from being displayed again.

As described above, the present embodiment makes it possible to reduce the number of registration procedures of password-less login by making a passkey common to authentication of each user interface registerable. The present embodiment also registers a passkey for password-less login in authentication for a plurality of user interfaces by a simple operation, and makes it possible to make the authentication of the plurality of user interfaces password-less, and improve the authentication security. In other words, it is possible to register a passkey for password-less login in authentication for a plurality of user interfaces by a simple operation, and make the authentication of the plurality of user interfaces password-less by performing a registration operation once, making it possible to reduce the number of registration procedures. It is also possible to use a multi-factor authentication technique such as the FIDO^{®}, and the like, and improve the authentication security.

In other words, it becomes possible to easily perform passkey registration for a plurality of user interface by one step, making it possible to significantly improve usability and authentication security of the apparatus.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus comprising:
a storage;
a first user interface;
a second user interface;
registration means configured to register key data to be used for signature verification that is included in a key pair received from an external terminal and generated based on authentication processing in the external terminal, into the storage in association with the first user interface; and
selection means configured to receive user selection indicating whether to register the key data also in association with the second user interface,
wherein, in a case where user selection indicating that the key data is to be registered also in association with the second user interface is received by the selection means, the registration means registers the key data into the storage in association with the second user interface.

2. The information processing apparatus according to claim 1,
wherein the first user interface is a user interface configured to perform an operation from operation means of the information processing apparatus, and
wherein the second user interface is a user interface configured to perform an operation from an external apparatus via a network.

3. The information processing apparatus according to claim 1,
wherein the first user interface is a user interface configured to perform an operation from an external apparatus via a network, and
wherein the second user interface is a user interface configured to perform an operation from operation means of the information processing apparatus.

4. The information processing apparatus according to any one of claims 1 to 3, further comprising disabling means configured to disable password authentication on a corresponding user interface, in a case where the key data is registered into the storage.

5. The information processing apparatus according to any one of claims 1 to 4, wherein the selection means is configured to perform control to not receive the user selection, in a case where the key data has already been registered in the storage in association with the second user interface.

6. A method of an information processing apparatus including a storage, a first user interface, and a second user interface, the method comprising:
registering (S930) key data to be used for signature verification that is included in a key pair received from an external terminal and generated based on authentication processing in the external terminal, into the storage in association with the first user interface;
receiving user selection (S933) indicating whether to register the key data in association with the second user interface; and
in a case where user selection indicating that the key data is to be registered in association with the second user interface is received, registering the key data into the storage in association with the second user interface.

7. The method according to claim 6,
wherein the first user interface is a user interface for performing an operation from operation means of the information processing apparatus, and
wherein the second user interface is a user interface for performing an operation from an external apparatus via a network.

8. The method according to claim 6,
wherein the first user interface is a user interface for performing an operation from an external apparatus via a network, and
wherein the second user interface is a user interface for performing an operation from operation means of the information processing apparatus.

9. The method according to any one of claims 6 to 8, wherein password authentication on a corresponding user interface is disabled in a case where the key data is registered into the storage.

10. The method according to any one of claims 6 to 9, wherein control is performed to not receive the user selection, in a case where the key data has already been registered in the storage in association with the second user interface.

11. A recording medium storing a program for causing an information processing apparatus that includes a storage, a first user interface, and a second user interface, to carry out a method, the method comprising:
registering key data to be used for signature verification that is included in a key pair received from an external terminal and generated based on authentication processing in the external terminal, into the storage in association with the first user interface;
receiving user selection indicating whether to register the key data in association with the second user interface; and
in a case where user selection indicating that the key data is to be registered in association with the second user interface is received, registering the key data into the storage in association with the second user interface.
